# EUROPÄISCHE PATENTSCHRIFT

(11) **EP 0 571 834 B1**
(45) Veröffentlichungstag und Bekanntmachung des Hinweises auf die Patenterteilung: **24.07.1996**
(21) Anmeldenummer: 93107852.1
(22) Anmeldetag: 14.05.1993
(51) Int. Cl.: F04D 29/22, F04D 29/44, F16B 35/04

(54) **Verbindungselement für mehrteilige Strömungsführungseinrichtung**
Connecting element for a flow guiding device made up of several components
Elément de rattachement pour dispositif de guidage d'écoulement en plusieurs pièces

(30) Priorität: 23.05.1992 DE 4217163
(43) Veröffentlichungstag der Anmeldung: 01.12.1993
(73) Patentinhaber: KSB Aktiengesellschaft, D-67227 Frankenthal (DE)
(72) Erfinder: Urban, Jörg, W-6700 Ludwigshafen (DE)

(56) Entgegenhaltungen:
- GB-A- 468 255
- US-A- 1 539 826
- US-A- 2 780 176
- US-A- 3 943 818

## Beschreibung

Die Erfindung betrifft eine mehrteilige Lauf- oder Leiteinrichtung einer Strömungsmaschine, wobei mit mehreren Schraubelementen eine Deckscheibe an einer mit Schaufeln versehenen Deckscheibe befestigt ist.

Üblicherweise werden Lauf- oder Leiträder von Strömungsmaschinen als einteiliges Gußteil hergestellt. Als nachteilig für das hydraulische Verhalten der Maschinen erweisen sich in einigen Fällen jedoch die Gußrauhigkeiten sowie die Gußtoleranzen, wodurch Wirkungsgradeinbußen entstehen, die nur durch aufwendige Nacharbeiten zu verbessern sind. Bei Laufrädern mit besonders kleinen Austrittsquerschnitten ist es bekannt, den Eintrittsbereich als geschlossenes Laufrad und den Austrittsbereich als offenes Laufrad zu gießen. Der Austrittsbereich kann dann spanabhebend bearbeitet werden und wird im Anschluß daran mit einem Ringelement abgedeckt. Derartiges ist beispielsweise aus der DE-C 550 461 bekannt.

Besser zu bearbeiten sind sogenannte offene Lauf- oder Leiträder, die durch eine abdeckende und mittels Schraubelementen befestigte Deckscheibe zu einem geschlossenen Lauf- oder Leitrad ausgebildet werden. Beispiele hierfür sind aus der DE-C 509 458 und der 737 000 bekannt. Eine zusammengesetzte Lösung eines strömungsführenden Lauf- oder Leitrades ist auch aus der DE-B 10 21 719 bekannt, bei welcher ein Radflansch an die Schaufeln angenietet, angeschweißt oder angelötet wird.

Durch die US-2 780 176 und die GB-A-468 255 ist es bekannt, die Deckscheiben von Laufrädern mit versenkten Schraub- oder Niet-elementen zu befestigen. Diese haben jedoch den Nachteil, daß beim Lösen eines derartigen Elementes die verbleibenden Elemente einer höheren Belastung ausgesetzt werden. Infolgedessen ist in kürzester Zeit mit einer Zerstörung der Vebindung zu rechnen.

Aus der US-A-1 539 826 ist für den Rahmen einer Brille eine schraubverbindung bekannt, bei der eine einzelne Schraube zwei Gewindeenden des Brillenglas in seiner Position halten soll. Diese diffizile feinmechanische Verbindung erfordert eine äußerst feinfühlige Behandlung, da andernfalls mit einer Zerstörung von Glas oder Brillengestell zu rechnen ist. Die Verwendung im strömungsmaschinenbau mit den dort vorherrschenden völlig anderen Belastungen läßt die Verwendung als ungeeignet erscheinen.

Der Erfindung liegt das Problem zugrunde, für zusammengesetzte Lauf- und/oder Leiträder eine Verbindung zu entwickeln, welche eine Wärmebeeinflussung durch die zu fügenden Teile widerstehende Verbindung ermöglicht, wobei es von der Ausbildung der zu fügenden Teile weitgehend unabhängig ist. Die Lösung dieses Problems erfolgt gemäß dem kennzeichnenden Teil des Hauptanspruches.

Mittels dieser Lösung kann eine mehrteilige strömungsführende Einrichtung, sei es nun ein stillstehendes Leitrad oder ein rotierendes Laufrad, mit definierter Vorspannung der Schraubverbindungen montiert werden, wobei eine zusätzliche Schraubensicherung nicht erforderlich ist. Durch die Befestigung, beispielsweise einer Deckscheibe an den Schaufeln einer beschaufelten Deckscheibe mit mehreren erfindungsgemäßen Gewindestiften, würde das Lösen eines Gewindestiftes eine Verspannung innerhalb der Deckscheibe bewirken. Diese würde dadurch sichernd auf die anderen Gewindestifte einwirken bzw. der gelöste Stift kann sich nicht weiter lösen. Bei der Montage ist es vorteilhaft, die Gewindestifte gleichzeitig zu bestätigen. Mit Hilfe einer mehrspindligen Vorrichtung ist dies problemlos möglich und es ergibt sich somit eine schnelle Montage.

Durch eine gegenläufige Gewindeanordnung auf jeden Gewindestift kann die Montagezeit nochmals erheblich verkürzt werden.

Die in den Ansprüchen 3 und 4 beschriebenen Ausgestaltungen befassen sich mit unterschiedlichen Durchmessern der Gewindeabschnitte und einer Auslaufnut zwischen den Gewindeabschnitten. Je nach den zwischen den zu fügenden strömungsführenden Teilen auftretenden Belastungen kann der jeweils günstigst erscheinende größere Gewindeabschnitt in dem entsprechend stabileren Bauteil angeordnet werden. In den Fällen, in denen eine Gewinde-Auslaufnut im Bereich der Teilfuge zu liegen kommt, ist eine fugenlose Verbindung möglich.

Die Verwendung einer innenliegenden, formschlüssigen Gestaltung für krafteinleitende Werkzeuge erlaubt eine flächenbündige Gestaltung ohne störende Oberfläche. Eventuell etwas über die gefügten Oberflächen hinausragende Teile der Gewindestifte können für eine flächenbündige Ausbildung ohne weiteres abgeschliffen werden. Aufgrund der innenliegenden Gestaltung für die Krafteinleitung sind sie trotzdem noch lösbar. Für solche Fälle ist die Ausbildung der Gewindestifte als Hohlteil oder Rohrstück vorteilhaft. Dadurch lassen sich auch günstig Anzugsmomente gezielt erstellen. Für besonders übervorsichtige Anwender ist es ohne weiteres möglich, durch einen einfachen Körnerschlag eine doppelte Verdrehsicherung zu erlangen.

Ausführungsbeispiele der Erfindung sind in den Zeichnungen dargestellt und werden im folgenden näher beschrieben. Es zeigen die
- Fig. 1: einen Querschnitt durch ein montiertes Laufrad, die
- Fig. 2: in vergrößerter Darstellung die in Fig. 1 eingekreiste Einzelheit X sowie in gleicher Größe in
- Fig. 3: den Zustand vor der Montage.

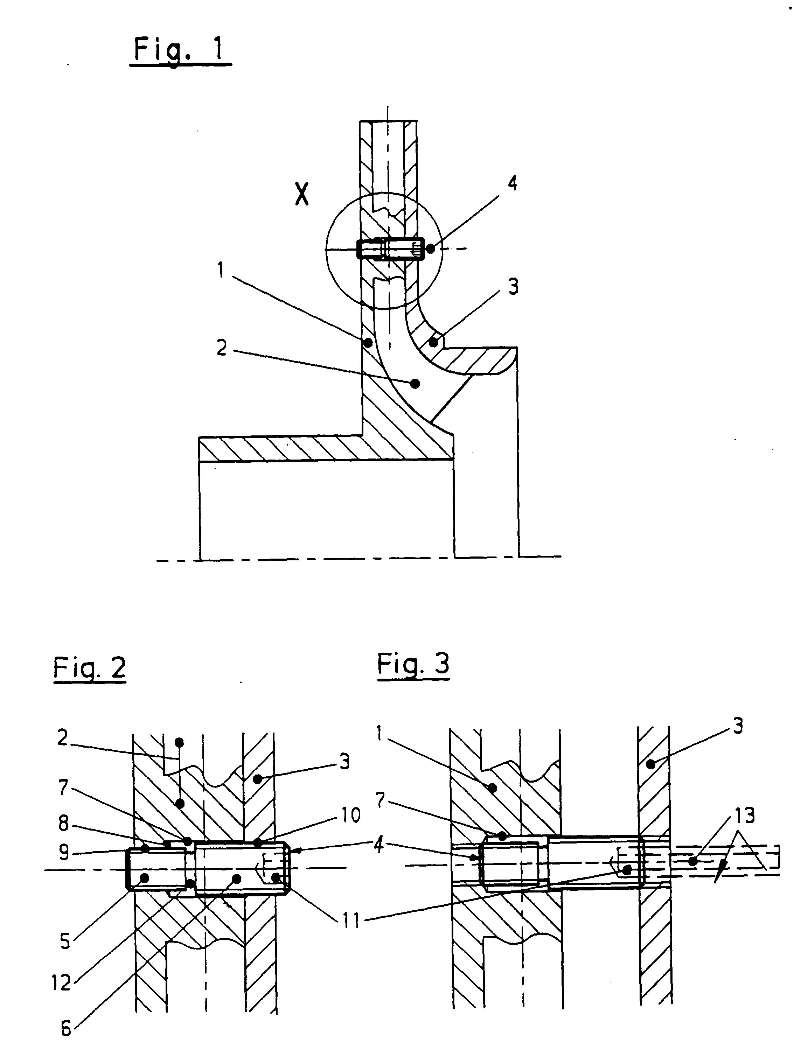

In der Fig. 1 wird eine Verbindung am Beispiel eines zusammengesetzten radialen Kreiselpumpenlaufrades gezeigt. Die kräfteübertragende druckseitige Laufraddeckscheibe (1) ist hier mit integrierten Schaufeln (2) versehen. Dieses Bauteil kann sowohl als ein Gußteil oder als spanabhebend hergestelltes Teil ausgebildet sein. Die saugseitige Laufraddeckscheibe (3) ist mit Hilfe von Gewindestiften(4) befestigt. Die Gewindestifte (4) selbst sind innerhalb der Schaufeln (2) befestigt, wobei die Gewindestifte (4) in diesem Bereich einen Durchmesser aufweisen, der kleiner als die Schaufeldicke ist. Anstelle des Laufrades könnte diese Befestigung auch am Beispiel eines stillstehenden Leitrades dargestellt sein. Es ist dabei unerheblich, ob das strömungsführende Bauteil als stillstehendes oder rotierendes Element innerhalb der Strömungsmaschine vorgesehen ist.

In der Fig. 2 ist in vergrößerter Darstellung die in Fig. 1 mit X markierte und eingekreiste Verbindung gezeigt. Der Gewindestift (4) weist zwei Gewindeabschnitte (5, 6) mit unterschiedlichen Durchmessern auf. Innerhalb der Schaufel (2) ist eine Sackbohrung (7) angebracht, in deren Grund (8) sich eine im Durchmesser kleinere Gewindebohrung (9) mit z. B. Linksgewinde befindet. Die gegen die Schaufeln gepreßte schaufellose Deckscheibe (3) weist eine größere Gewindebohrung (10) mit z. B. Rechtsgewinde auf. Die Sackbohrung (7) ist gerade so bemessen, daß der im Durchmesser größere Gewindeabschnitt (6) hineinpaßt. Durch bekannte formschlüssige Werkzeuge, wie Innensechskantschlüssel oder ähnlich gestaltete Werkzeuge, wird das Anzugsmoment über die stirnseitig angeordnete formschlüssige Gestaltung (11) in die Verbindung eingebracht. Die zwischen den Gewindeabschnitten (5, 6) befindliche Auslaufnut (12) erleichtert die Gewindeherstellung und auch eine Montage in denjenigen Fällen, in denen beide Deckscheiben mit Schaufelteilen versehen sind und die Teilebene genau zwischen den Gewindeabschnitten angeordnet ist.

In Fig. 3 ist der Zustand vor der Montage der aneinanderzufügenden Teile dargestellt. Die Gewindestifte (4) werden hierzu in die Sackbohrungen (7) eingelegt und auf die herausragenden, freistehenden Enden der Gewindestifte (4) wird die zu fügende Deckscheibe (3) aufgelegt. In die stirnseitig angeordnete formschlüssige Gestaltung (11) werden entsprechende Werkzeuge (13) - hier gestrichelt dargestellt - eingesteckt. Durch gleichzeitige gleichmäßige Drehbewegungen der Gewindestifte werden die einander zu fügenden Teile (1, 3) gegenseitig zur Anlage gebracht. Mit Hilfe eines einfach gestalteten Werkzeuges oder eines Mehrspindelautomaten läßt sich dieser Fügevorgang sehr schnell und präzise erstellen.

Unter Ausnutzung der Gewindetoleranzen ist es auch möglich, die Gewindestifte einzeln und schrittweise von Hand anzuziehen.

Die unterschiedlichen Gewindeanfangspunkte der einzelnen Gewinde bereiten keine Schwierigkeiten, da infolge der Gewindetoleranzen ein gleichmäßiges Anziehen gewährleistet wird. Im Ausführungsbeispiel ist eine Gewindestiftlänge dargestellt, welche größer als die Breite der strömungsführenden Einheit ist. Diese wurde gewählt, um aufgrund der kurzen Gewindetraglänge innerhalb der dünnwandigen Teile immer die maximale Gewindelänge zur Verfügung zu haben. Die überstehenden Teile können dann nach erfolgter Verbindung in einfacher Weise spanabhebend entfernt werden. Aufgrund der Tiefe der formschlüssigen Gestaltung wäre dann immer noch ein Lösen der Schraubverbindung möglich. Die Gewindestifte sind auch bei anderen als der gezeigten Leiteinrichtung verwendbar, z. B. wenn beide Leiteinrichtungsteile mit Schaufelteilen versehen sind.

## Patentansprüche

1. Mehrteilige Lauf- oder Leiteinrichtung einer Strömungsmaschine, wobei mit mehreren Schraubelementen (4) eine Deckscheibe (3) an einer beschaufelten Deckscheibe (1) befestigt ist, **dadurch gekennzeichnet**, daß die Schraubelemente als unterschiedliche Gewindeabschnitte (5, 6) aufweisende Gewindestifte (4) ausgebildet sind und daß mindestens eine Stirnseite der Gewindestifte (4) mit einer formschlüssigen, kräfteübertragenden Gestaltung (11) versehen ist.

2. Lauf- oder Leiteinrichtung einer Strömungsmaschine nach Anspruch 1, dadurch gekennzeichnet, daß die Gewindeabschnitte (5, 6) gegenläufig ausgebildet sind.

3. Lauf- oder Leiteinrichtung nach Anspruch 1, dadurch gekennzeichnet, daß die Gewindeabschnitte (5, 6) unterschiedliche Durchmesser und/oder Steigungen aufweisen.

4. Lauf- oder Leiteinrichtung nach den Ansprüchen 1 bis 3, dadurch gekennzeichnet, daß zwischen den Gewindeabschnitten eine Auslaufnut (12) vorgesehen ist.

5. Lauf- oder Leiteinrichtung nach Anspruch 1, dadurch gekennzeichnet, daß die formschlüssige, kräfteübertragende Gestaltung (11) innenliegend ausgebildet ist.

6. Lauf- oder Leiteinrichtung nach Anspruch 5, dadurch gekennzeichnet, daß der Gewindestift (4) als ein Hohlteil ausgebildet ist.

7. Lauf- oder Leiteinrichtung nach einem der Ansprüche 1 bis 6, dadurch gekennzeichnet, daß nach erfolgter Montage die Gewindestifte (4) mit den Oberflächen der gefügten Deckscheiben (1,3) flächenbündig sind.

## Claims

1. The multi-part rotor or guide means of a fluid flow machine wherein together with a plurality of screw elements (4) a cover disk (3) is secured to a vaned cover disk (1), characterized in that the screw elements are designed in the form of screw threaded pins (4) having different screw thread sections (5 and 6) and in that at least one terminal face of the screw threaded pins (4) is provided with an interlocking, force transmitting configuration (11).

2. The multi-part rotor or guide means as claimed in claim 1, characterized in that the screw threaded sections (5 and 6) are of opposite hand.

3. The multi-part rotor or guide means machine as claimed in claim 1, characterized in that the screw threaded sections (5 and 6) possess different diameters and/or leads.

4. The multi-part rotor or guide means machine as claimed in any one of the claims 1 through 3, characterized in that between the screw threaded sections a separating groove (12) is provided.

5. The multi-part rotor or guide means machine as claimed in claim 1, characterized in that the interlocking, force transmitting configuration (11) is formed internally.

6. The multi-part rotor or guide means as claimed in claim 5, characterized in that the screw threaded pin (4) is designed in the form of a hollow rivet part.

7. The multi-part rotor or guide means machine as claimed in any one of the claims 1 through 6, characterized in that after completion of assembly the screw threaded pins (4) are aligned surface-wise with the surfaces of the fitted cover disks (1 and 3).

## Revendications

1. Dispositif multiple de marche ou de conduite d'une turbomachine dans lequel un flasque (3) est fixé à un flasque (1) muni d'aubes par plusieurs éléments de vissage (4), **caractérisé** par le fait que les élément de vissage ont la forme de tiges filetées (4) présentant des sections de filetage (5, 6) diverses et qu'au moins un côté frontal des tiges filetées (4) présente une forme (11) adéquate permettant la transmission des forces.

2. Dispositif de marche ou de conduite d'une turbomachine selon la revendication 1 caractérisé en ce que les sections de filetage (5, 6) sont de direction contraire.

3. Dispositif de marche ou de conduite selon la revendication 1 caractérisé en ce que les sections de filetage (5, 6) présentent des diamètres et/ ou des pentes différentes.

4. Dispositif de marche ou de conduite selon les renvendications 1 à 3 caractérisé en ce qu'une rainure de sortie (12) est prévue entre les sections de filetage.

5. Dispositif de marche ou de conduite selon la revendication 1 caractérisé en ce que la forme (11) adéquate permettant la transmission des forces est placée à l'intérieur.

6. Dispositif de marche ou de conduite selon la revendication 5 caractérisé en ce que la tige filetée (4) a la forme d'une pièce creuse.

7. Dispositif de marche ou de conduite selon une des revendications 1 à 6 caractérisé en ce que, après montage, les tiges filetées (4) sont à surface plane avec les surfaces des flasques (1,3) joints.
